# EUROPÄISCHE PATENTSCHRIFT

(11) **EP 0 844 157 B1**
(45) Veröffentlichungstag und Bekanntmachung des Hinweises auf die Patenterteilung: **16.01.2002**
(21) Anmeldenummer: 97119164.8
(22) Anmeldetag: 03.11.1997
(51) Int. Cl.: B60T 17/22, B60T 13/74

(54) **Sicherheitsschaltung in Bremsanlagen für schienengebundene Fahrzeuge**
Safety circuit in brake for railway vehicles
Circuit de sécurité dans les systèmes de freinage de véhicules ferroviaires.

(30) Priorität: 22.11.1996 DE 19648349
(43) Veröffentlichungstag der Anmeldung: 27.05.1998
(73) Patentinhaber: Kiepe Elektrik GmbH & Co. KG, 40599 Düsseldorf (DE)
(72) Erfinder: Larrass, Dieter, 40822 Mettmann (DE)
(74) Vertreter: Feder, Wolf-Dietrich, Dr. Dipl.-Phys.

(56) Entgegenhaltungen:
- EP-A- 0 181 763
- US-A- 2 055 563
- US-A- 2 800 645
- US-A- 2 810 610
- US-A- 4 660 696

## Beschreibung

Die Erfindung betrifft eine Sicherheitsschaltung in Bremsanlagen für schienengebundene Fahrzeuge, die nicht mit einer Druckluftbremsanlage ausgerüstet sind, insbesondere für Stadtbahnwagen oder -züge, die mit elektrisch ansteuerbaren Bremsen sowie mindestens einem einen Rechner enthaltenden elektronischen Bremssteuergerät ausgerüstet sind.

Es ist bekannt, daß seit einiger Zeit im öffentlichen Nahverkehr eingesetzte Stadtbahnzüge mindestens auf Teilen ihrer Fahrstrecke Bahnkörper der Deutschen Bahn AG benutzen und deshalb den Vorschriften der EBO genügen müssen. In einem solchen Falle müssen diese Stadtbahnzüge mit einem Sicherheitsbremssystem ausgerüstet sein, das der EBO entspricht.

Eisenbahnzüge besitzen ein Druckluftsystem, das, wenn irgendwo im Zug die Druckluft weggenommen wird, sofort anspricht und eine Bremsung auslöst. Stadtbahnzüge dagegen besitzen nicht notwendigerweise ein Druckluftsystem, das in der obenbeschriebenen Weise als Sicherheitsbremssystem wirksam ist, sondern die Ansteuerung von Fahren und Bremsen erfolgt nur auf elektrischem Wege.

Der Erfindung liegt die Aufgabe zugrunde, eine Sicherheitsschaltung in Bremsanlagen für schienengebundene Fahrzeuge, die nicht mit einer Druckluftbremsanlage ausgerüstet sind, also insbesondere für Stadtbahnwagen oder -züge der oben angegebenen Bauart zu schaffen, das in seiner Funktion (fail-safe-Verhalten) die Eigenschaften eines Druckluftbremssystems besitzt, ohne daß in der Realität ein Druckluftsystem installiert werden muß.

Die Lösung dieser Aufgabe erfolgt erfindungsgemäß mit den Merkmalen aus dem kennzeichnenden Teil des Patentanspruchs 1. Vorteilhafte Weiterbildungen der Erfindung sind in den abhängigen Ansprüchen beschrieben.

Die Erfindung geht von der Erkenntnis aus, daß es in diesem Falle zweckmäßig ist, die Funktion des Druckluftbremssystems eines Eisenbahnzuges in einer elektrischen Schaltung nachzubilden. Die Wagen eines Stadtbahnzuges sind mit zusätzlichen Federspeicherbremsen ausgerüstet, die über ein Notbremsventil einschaltbar sind. Bei einem Spannungsausfall auf der Leitung sprechen diese Federspeicherbremsen an. Es ist aber nicht ohne weiteres möglich, die Notbremsventile in einem elektrischen Schaltkreis hintereinander zu schalten, da hierzu der jeweilige Spannungsabfall an ihnen zu groß ist.

Der Grundgedanke der Erfindung besteht daher darin, eine Signalleitungsschleife, also eine Doppelleitung vom Zugende zum Zuganfang und wieder zurück zum Zugende zu führen, wobei im ersten Abschnitt dieser Doppelleitung, der im folgenden Signalerzeugungsabschnitt genannt wird und der sich an die Spannungseinspeisestelle anschließt, eine ganze Reihe von Steuerkontakten in Serie geschaltet liegen, die im Betrieb geschlossen sind und in den unterschiedlichsten Situationen öffnen. Im zweiten Teil der Doppelleitung, der mit dem ersten am entgegengesetzten Ende zur Spannungseinspeisungsstelle verbunden ist und im folgenden als Signalverteilungsabschnitt bezeichnet wird, liegen dann die Bremsen bzw. ihre elektrischen Ansteuervorrichtungen in Parallelschaltung. Diese Schaltungsweise hat die Folge, daß, wenn einer der in Serie geschalteten Kontakte im Signalerzeugungsabschnitt öffnet, die Spannung im Signalverteilungsabschnitt weggenommen wird und sogleich an allen Bremsen ein Bremsvorgang ausgelöst wird. Damit die Signalleitungsschleife die Eigenschaften einer echten Schleife erhält, wird an der Einspeisungsstelle, die am Zugende liegt, der Signalzustand des Signalverteilungsabschnitts über einen Kontakt in den Signalerzeugungsabschnitt zurückgekoppelt und damit ein Selbsthaltekreis aufgebaut. Wie weiter unten näher beschrieben, wird die Selbsthaltung vom Fahrer mittels eines speziellen Tasters vom führenden Fahrerstand aus aktiviert. Die Signalleitungsschleife arbeitet demnach nach dem Ruhestromprinzip, und nach Aufbau der Selbsthaltung werden alle an das Sicherheitsbremssystem angekoppelten Bremssysteme aktiviert, wenn die Signalleitungsschleife an einer beliebigen Stelle, entweder im Signalerzeugungsabschnitt oder im Signalverteilungsabschnitt, unterbrochen wird.

Im folgenden wird anhand der beigefügten Zeichnungen ein Ausführungsbeispiel für eine Sicherheitsschaltung nach der Erfindung näher erläutert.

In den Zeichnungen zeigen:
Fig. 1 in einem Prinzipschaltbild eine Sicherheitsschaltung für einen Stadtbahnzug in einem Zustand, in dem nur ein Fahrerstand aktiv ist;
Fig. 2 in einer detaillierteren Schaltungsdarstellung die Elemente der Sicherheitsschaltung nach Fig. 1, welche die Aktivierung der Signalleitungsschleife bewirken;
Fig. 3 in einer Darstellung analog Fig. 1 die Sicherheitsschaltung in einer allgemeinen Darstellung, in der beide Fahrerstände am Ende des Zuges aktivierbar sind.

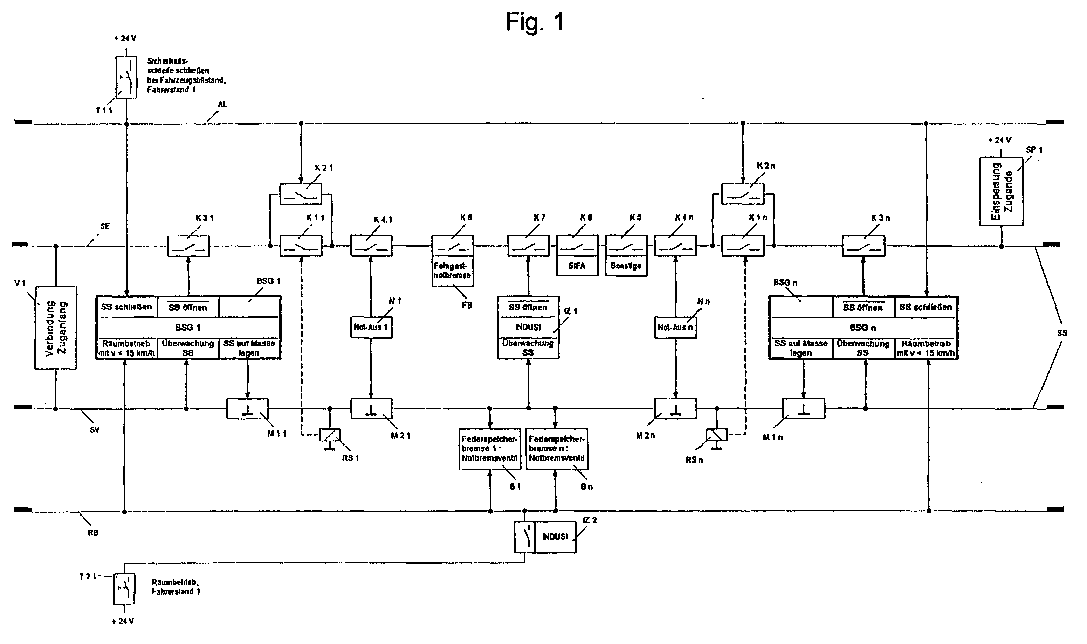

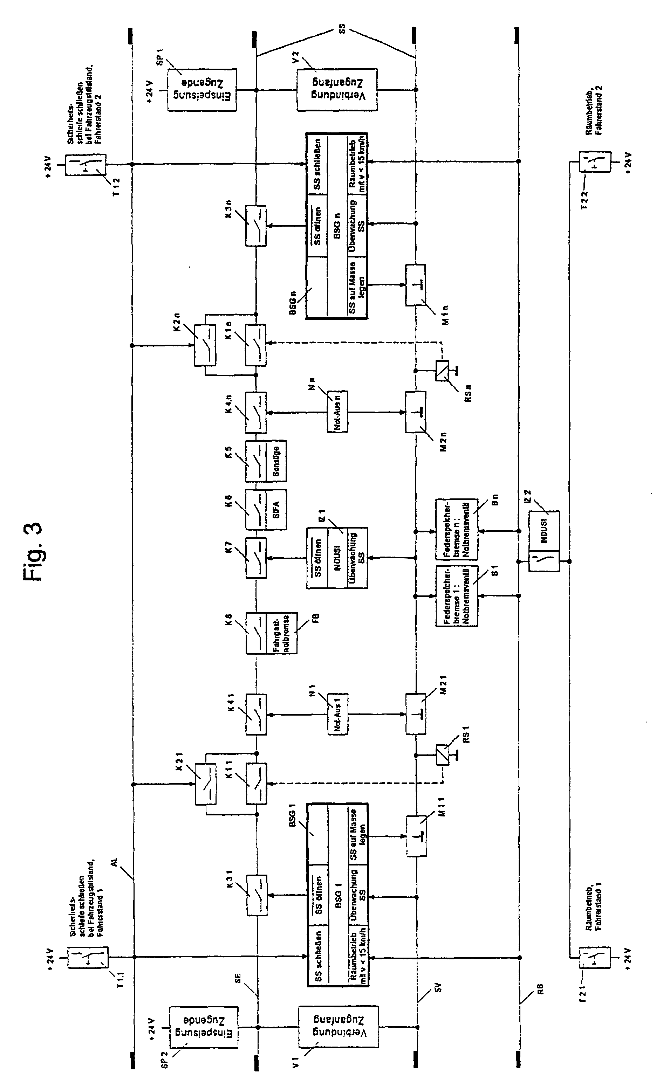

Um einer übersichtlicheren Darstellung willen ist in Fig. 1 die Sicherheitsschaltung in einem Zustand dargestellt, in dem nur ein Fahrerstand aktiv ist. Selbstverständlich ist es, wie in Fig. 3 dargestellt, möglich, jeden der beiden Fahrerstände zu aktivieren, wobei sich dann jeweils Zuganfang und Zugende vertauschen. Da es sich in allen Darstellungen um die gleiche Schaltung handelt, werden in den Fig. 1 bis 3 jeweils die gleichen Bezugszeichen verwendet.

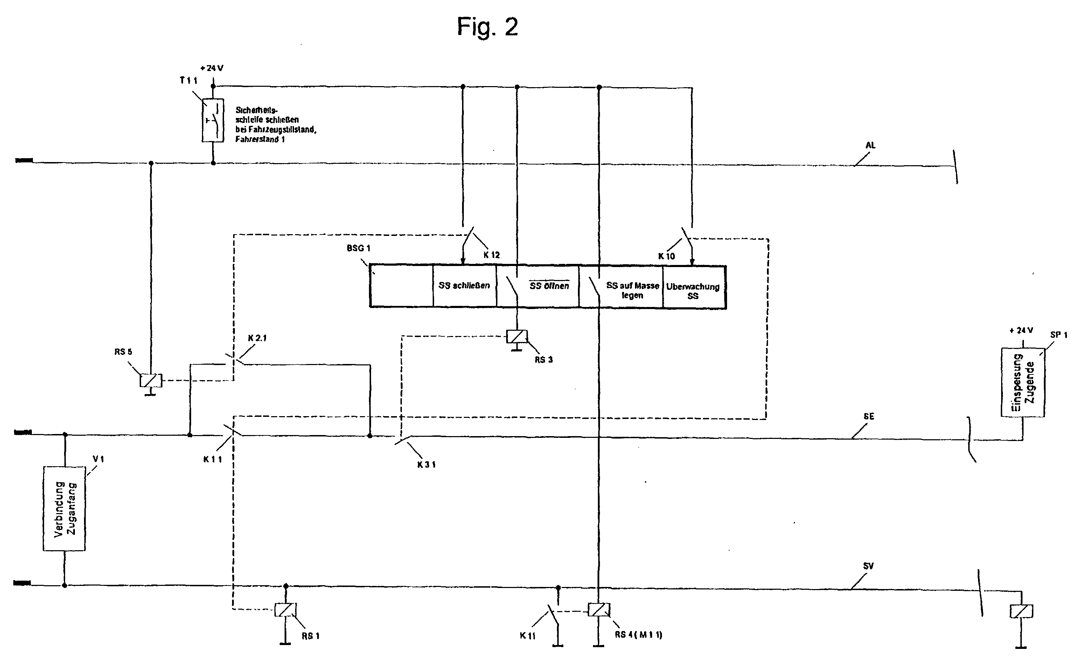

Die dargestellte Sicherheitsschaltung besitzt eine Signalleitungsschleife SS, die mit ihrem ersten Signalerzeugungsabschnitt SE am Zugende beginnt, wo über eine Vorrichtung SP1 die Speisespannung zugeführt wird, und durch den ganzen Zug bis zum Zuganfang läuft, wo sie über eine Verbindungsvorrichtung V1 mit einem Signalverteilungsabschnitt SV verbunden ist, der wieder zum Zugende zurückgeführt ist. Im Signalerzeugungsabschnitt SE liegen in Serie geschaltet eine Reihe von Kontakten K3.1, K1.1, K4.1, K8, K7, K6, K5, K4.n, K1.n, K3.n, die, wie weiter unten näher erläutert, im aktivierten Zustand der Schleife geschlossen sind und bei deren Öffnen die Spannung auf dem Signalverteilungsabschnitt SV unterbrochen wird. An den Signalverteilungsabschnitt SV sind parallel zueinander die elektrischen Ansteuervorrichtungen, also die Notbemsventile der Federspeicherbremsen B1 bis Bn angeschlossen. Der Zug ist mit mehreren Bremssteuergeräten BSG1 und BSGn ausgerüstet. Zum Schließen der aus den beiden Zweigen SE und SV bestehenden Schleife dient ein Selbsthaltekreis, der ebenfalls in mehrfacher Ausführung vorhanden ist. Die Kontakte K1.1 bis K1.n im Signalerzeugungsabschnitt SE sind jeweils durch einen parallel geschalteten Kontakt K2.1 bzw. K2.n überbrückbar. Der Kontakt K2.1 kann, wie weiter unten anhand von Fig. 2 erläutert, durch Drücken des Tasters T1.1 im Fahrerstand 1 kurzzeitig geschlossen werden. Dies hat zur Folge, daß die von SB1 zugeführte Spannung, wenn sich alle übrigen Kontakte im geschlossenen Zustand befinden, auf den Signalverteilungsabschnitt SV gelangt und eine Relaisspule RS1 bzw. RSn erregt, durch die dann der Kontakt K1.1 geschlossen wird. Das gleiche gilt für jeden Kontakt 1.n. Damit ist der Selbsthaltekreis geschlossen.

Zur weiteren Sicherung des Funktionierens des Sicherheitsbremssystems dienen die Bremssteuergeräte BSG1 bis BSGn. Sie üben unter anderem folgende Funktionen aus. Wenn infolge des Öffnens einer der Kontakte auf dem Signalerzeugungsabschnitt bei aktivierter Signalleitungsschleife die Spannung auf dem Signalverteilungsabschnitt SV den Wert 0V annimmt, wird dies von BSG1 bzw. BSGn am Eingang "Überwachung SS" festgestellt und es werden vom Ausgang "SS öffnen" aus weitere im Signalerzeugungsabschnitt SE liegende Kontakte K3.1, K3.n zusätzlich geöffnet. Gleichzeitig wird vom Ausgang "SS auf Masse legen" über einen Schalter M1.1 bzw. M1.n der Signalverteilungsabschnitt SV mit Masse verbunden. Auch bei der Aktivierung der Signalleitungsschleife SS tritt das Bremssteuergerät BSG1 bzw. BSGn in Funktion, indem es vom Taster T1.1 am Fahrerstand 1 über eine Ansteuerleitung AL am Eingang "SS schließen" ein Ansteuersignal erhält, durch welches sichergestellt wird, daß der Kontakt K3.1 bis K3.n geschlossen wird und der Schalter M1.1 bzw. M1.n zur Verbindung mit Masse geöffnet ist.

Die im Signalerzeugungsabschnitt SE in Serie angeordneten Kontakte können zur Auslösung von Bremsvorgängen benutzt werden, die durch sehr unterschiedliche Situationen und Zustände bedingt sein können. So gibt es beispielsweise in mehrfacher Ausführung einen Notausschalter N1 bzw. Nn, der einerseits den Kontakt K4.1 bzw. K4.n im Signalerzeugungsabschnitt SE öffnet und gleichzeitig über einen Schalter M2.1 bzw. M2.n den Signalverteilungsabschnitt SV mit Masse verbindet.

Der Kontakt K5 gehört zu einer Zugbeeinflussungsvorrichtung.

Der Kontakt K6 gehört zu einer Sicherheitsfahrschaltung "SIFA" und wird ebenfalls bei Auslösung der SIFA-Funktion während der Fahrt oder beim Ausfall dieses Gerätes geöffnet.

Der Kontakt K7 gehört zu einem induktiven Zugsicherungsgerät IZ1 und wird bei Auslösung der INDUSI geöffnet. Das Gerät IZ1 wird vom Signalverteilungsabschnitt SV her überwacht, so daß beim Ausfall des Gerätes ebenfalls der Kontakt K7 geöffnet wird.

Der Kontakt K8 gehört zu einer Fahrgastnotbremse FB.

Da bei einem Liegenbleiben eines Fahrzeugs oder eines Zuges auf offener Strecke ein Notfahrbetrieb möglich sein muß, um die Strecke zu räumen, ist das System mit einer Einrichtung zu seiner Überbrückung für den "Räumbetrieb mit Geschwindigkeitsbegrenzung" ausgerüstet. Hierzu können von einem Taster T2.1 am Fahrerstand aus die Bremsen B1 bis Bn gelöst werden. Gleichzeitig wird das Bremssteuergerät BSG1 bis BSGn derart angesteuert, daß im Räumbetrieb nur mit einer bestimmten Höchstgeschwindigkeit von beispielsweise 15km/h gefahren werden kann. In die Zuleitung vom Taster T2.1 aus ist ein weiteres Gerät IZ2 für induktive Zugsicherung eingeschaltet.

In Fig. 2 sind die das Aktivieren der Signalleitungsschleife bewirkenden Vorrichtungen etwas ausführlicher dargestellt. Vom Taster T1.1 des Fahrerstandes 1 aus wird die Aktivierung vorgenommen, die nur bei Fahrzeugstillstand ausgeführt werden kann. Durch Drücken des Tasters T1.1 wird die Relaisspule RS 5 erregt, was zum Schließen der Kontakte K2.1 und K12 führt. Durch das Schließen des Kontaktes K12 wird der Eingang "SS schließen" am Bremssteuergerät BSG1 aktiviert, was zum Schließen des Kontaktes K3.1 führt. Die von der Einspeisungsvorrichtung SP1 am Zugende zugeführte Spannung gelangt über die Verbindungsvorrichtung V1 auf die Relaisspule RS1 was zum Schließen des Kontaktes K1.1 im Signalerzeugungsabschnitt SE sowie zum Schließen des Kontaktes K10 am Bremssteuergerät BSG1 führt, womit gleichzeitig der Eingang "Überwachung SS" aktiviert ist. Beim Ausfall der Spannung auf dem Signalverteilungsabschnitt SV werden die Kontakte K1.1 und K10 geöffnet und vom Ausgang "SS auf Masse legen" im Bremssteuergerät BSG1 die Relaisspule RS 4 (in Fig. 1 Schalter M1.1) erregt und der Kontakt K11 geschlossen, durch den der Signalverteilungsabschnitt SV mit Masse verbunden wird.

In Fig. 3 ist die Schaltung nach Fig. 1 in der Weise ergänzt, daß nunmehr beide Fahrerstände 1 und 2 dargestellt sind. Dem Fahrerstand 2 ist der Taster T1.2 zugeordnet. Weiterhin erfolgt, wenn der Fahrerstand 2 aktiv ist, die Spannungseinspeisung durch die dann am Zugende liegende Einspeisungsvorrichtung SP2 und die Verbindung des Signalerzeugungsabschnitts SE mit dem Signalverteilungsabschnitt SV über die dann am Zuganfang liegende Verbindungsvorrichtung V2. Im Räumbetrieb von Fahrerstand 2 aus wird der Taster T2.2 betätigt. Im übrigen funktioniert die Schaltung nach Fig. 3 in der gleichen Weise wie anhand von Fig. 1 beschrieben.

Der Signalzustand der Signalleitungsschleife wird von den angekoppelten Bremssteuergeräten entsprechend einem vorgegebenen Rechnerprogramm in bestimmten Zeitabständen abgefragt. Wird ein Signalpegel von 0V festgestellt (Unterbrechung der Signalleitungsschleife), so wird sofort entsprechend dem vorgegebenen Programm der Bremsvorgang eingeleitet. Die Federspeicherbremsen werden direkt angesteuert und zusätzlich wird die Signalleitungsschleife im Signalerzeugungsabschnitt unterbrochen und der Signalverteilungsabschnitt mit Masse verbunden. Damit wird gewährleistet, daß immer alle Bremsen wirksam werden, auch in einem Störungsfall.

Bei einer Zugtrennung verändert sich im abgetrennten Zugteil der Spannungspegel an der Signalleitungsschleife auf 0V, so daß im abgetrennten Zugteil und dem führenden Zugteil eine Bremsung ausgelöst wird.

## Patentansprüche

1. Sicherheitsschaltung in Bremsanlagen für schienengebundene Fahrzeuge, die nicht mit einer Druckluftbremsanlage ausgerüstet sind, insbesondere für Stadtbahnwagen oder -züge, die mit elektrisch ansteuerbaren Bremsen sowie mindestens einem einen Rechner enthaltenden elektronischen Bremssteuergerät ausgerüstet sind, **dadurch gekennzeichnet, daß** eine Signalleitungsschleife (SS) vom ersten Ende des Wagens oder Zuges zum zweiten Ende dieses Wagens oder Zuges und wieder zurück zum ersten Ende geführt ist, die einen vom ersten zum zweiten Ende des Wagens oder Zuges laufenden Signalerzeugungsabschnitt (SE) und einen vom zweiten Ende des Wagens oder Zuges zurück zum ersten Ende laufenden Signalverteilungsabschnitt (SV) aufweist, wobei der Signalerzeugungsabschnitt (SE) am zweiten Ende des Wagens oder Zuges elektrisch mit dem Signalverteilungsabschnitt (SV) verbunden ist und die Speisespannung für die Signalleitungsschleife (SS) am ersten Ende des Wagens oder Zuges dem Anfang des Signalerzeugungsabschnitts (SE) zugeführt wird und daß im Signalerzeugungsabschnitt (SE) alle mindestens im aktivierten Zustand der Signalleitungsschleife (SS) geschlossenen Kontakte (K1.1, K1.n, K3.1, K3.n, K4.1, K4.n, K5, K6, K7, K8) in Serie angeordnet sind, bei deren Öffnen ein Bremsvorgang ausgelöst werden soll und die elektrisch ansteuerbaren Bremsen (B1 bis Bn) parallel zueinander an den Signalverteilungsabschnitt (SV) angeschlossen sind derart, daß beim Ausfall der Spannung auf dem Signalverteilungsabschnitt (SV) gleichzeitig alle Bremsen (B1 bis Bn) zur Bremsung angesteuert werden und daß zwischen dem Anfang des Signalerzeugungsabschnitts (SE) und dem Ende des Signalverteilungsabschnitts (SV) ein Selbsthaltekreis zur Aktivierung der Signalleitungsschleife (SS) angeordnet ist, der einen im Signalerzeugungsabschnitt (SE) liegenden, im Ruhezustand offenen Relaiskontakt (K1.1 bzw. K1.n) besitzt, welcher durch einen tasterbetätigten Kontakt (K2.1 bzw. K2.n) überbrückbar ist, sowie eine an den Signalverteilungsabschnitt (SV) angeschlossene Relaisspule (RS1 bzw. RSn) derart, daß bei Erregung der Relaisspule (RS1 bzw. RSn) der Relaiskontakt (K1.1 bzw. K1.n) schließt.

2. Sicherheitsschaltung nach Anspruch 1, **dadurch gekennzeichnet, daß** jedes elektronische Bremssteuergerät (BSG1, BSGn) mit einem Überwachungseingang an den Signalverteilungsabschnitt (SV) angeschlossen ist derart, daß beim Ausfall der Spannung am Überwachungseingang einerseits ein im Signalerzeugungsabschnitt (SV) angeordneter Kontakt (K3.1 bzw. K3.n) geöffnet wird und andererseits der Signalverteilungsabschnitt (SV) mit Masse verbunden wird.

3. Sicherheitsschaltung nach Anspruch 2, **dadurch gekennzeichnet, daß** jeder von einem der elektronischen Bremssteuergeräte (BSG1, BSGn) angesteuerte Kontakt (K3.1 bzw. K3.n) im Signalerzeugungsabschnitt (SE) im Ruhezustand der Signalleitungsschleife (SS) geöffnet ist und die Bremssteuergeräte (BSG1, BSGn) jeweils einen Aktivierungseingang aufweisen, der zusammen mit der Aktivierung der Signalschleife (SS) angesteuert wird, worauf dieser Kontakt (K3.1, K3.n) geschlossen wird.

4. Sicherheitsschaltung nach einem der Ansprüche 1 bis 3 **gekennzeichnet durch** einen Not-Ausschalter (N1, Nn), bei dessen Betätigung einer der Kontakte (K4.1, K4.n) im Signalerzeugungsabschnitt (SE) geöffnet und gleichzeitig der Signalverteilungsabschnitt (SV) mit Masse verbunden wird.

5. Sicherheitsschaltung nach einem der Ansprüche 1 bis 4 **gekennzeichnet durch** eine Fahrgastnotbremse (FB), bei deren Betätigung einer der Kontakte (K8) im Signalerzeugungsabschnitt (SE) geöffnet wird.

6. Sicherheitsschaltung nach einem der Ansprüche 1 bis 5 **gekennzeichnet durch** ein induktives Zugsicherungsgerät (IZ1), bei dessen Ansprechen oder bei dessen von den Bremssteuergeräten (BSG1, BSGn) erkanntem Funktionsausfall einer der Kontakte (K7) im Signalerzeugungsabschnitt (SE) geöffnet wird.

7. Sicherheitsschaltung nach einem der Ansprüche 1 bis 6 **gekennzeichnet durch** eine Einrichtung zu ihrer Überbrückung für den Notfahrbetrieb mit Vorrichtungen zum Lösen der ansteuerbaren Bremsen (B1 bis Bn), wobei von den Bremssteuergeräten (BSG1, BSGn) aus die Fahrzeuggeschwindigkeit auf einen vorgegebenen Höchstwert begrenzt wird.

## Claims

1. Safety circuit in braking systems for railborne vehicles that are not equipped with a compressed-air braking system, in particular for suburban railway carriages or trains that are equipped with electrically actuable brakes and at least one electronic brake control appliance comprising a computer, **characterized in that** a signal line loop (SS) is routed from the first end of the carriage or train to the second end of said carriage or train and back again to the first end, which loop has a signal generating section (SE) running from the first to the second end of the carriage or train and a signal distribution section (SV) running from the second end of the carriage or train back to the first end, the signal generating section (SE) being electrically connected to the signal distribution section (SV) at the second end of the carriage or train and the supply voltage for the signal line loop (SS) being fed at the first end of the carriage or train to the beginning of the signal generating section (SE) and **in that** all the contacts (K1.1, K1.n, K3.1, K3.n, K4.1, K4.n, K5, K6, K7, K8) that are closed at least in the activated state of the signal line loop (SS) are disposed in series, when they are opened a braking operation is to be triggered and the electrically actuable brakes (B1 to Bn) are connected in parallel with one another to the signal distribution section (SV) in such a way that, if there is a voltage failure on the signal distribution section (SV), all the brakes (B1 to Bn) are simultaneously actuated for braking and **in that** there is disposed between the beginning of the signal generating section (SE) and the end of the signal distribution section (SV) a self-holding circuit for activating the signal line loop (SS) that has a relay contact (K1.1 or K1.n, respectively) that is situated in the signal generating section (SE) and is open in the quiescent state and that can be bypassed by a keyactuated contact (K2.1 or K2.n, respectively), and a relay coil (RS1 or RSn, respectively) connected to the signal distribution section (SV) in such a way that the relay contact (K1.1 or K1.n, respectively) closes if the relay coil (RS1 or RSn, respectively) is energized.

2. Safety circuit according to Claim 1, **characterized in that** a monitoring input of each electronic brake control appliance (BSG1, BSGn) is connected to the signal distribution section (SV) in such a way that, if the voltage fails at the monitoring input, on the one hand, a contact (K3.1 or K3.n, respectively) disposed in the signal generating section (SV) is opened and, on the other hand, the signal distribution section (SV) is connected to chassis.

3. Safety circuit according to Claim 2, **characterized in that** each contact (K3.1 or K3.n, respectively) actuated by one of the electronic brake control appliances (BSG1, BSGn) in the signal generating section (SE) is open in the quiescent state of the signal line loop (SS) and the brake control appliances (BSG1, BSGn) each have an activation input that is actuated together with the activation of the signal loop (SS), whereupon said contact (K3.1, K3.n) is closed.

4. Safety circuit according to one of Claims 1 to 3, **characterized by** an emergency stop switch (N1, Nn) and if it is actuated, one of the contacts (K4.1, K4.n) in the signal generating section (SE) is opened and the signal distribution section (SV) is simultaneously connected to chassis.

5. Safety circuit according to one of Claims 1 to 4, **characterized by** a passenger emergency brake (FB) and if it is actuated, one of the contacts (K8) in the signal generating section (SE) is opened.

6. Safety circuit according to one of Claims 1 to 5, **characterized by** an inductive train protection appliance (IZ1) and if it responds or if its functional failure is detected by the brake control appliances (BSG1, BSGn), one of the contacts (K7) in the signal generating section (SE) is opened.

7. Safety circuit according to one of Claims 1 to 6, **characterized by** a device for bypassing it for the purpose of emergency automotive operation having devices for releasing the actuable brakes (B1 to Bn), the vehicle speed being limited to a specified maximum value by the brake control appliances (BSG1, BSGn).

## Revendications

1. Circuit de sécurité dans des installations de freinage pour véhicules circulant sur des rails et qui ne sont pas équipés d'une installation de freinage à air comprimé, notamment pour des voitures ou des rames de chemin de fer métropolitain, qui sont équipées de freins pouvant être commandés électriquement ainsi que d'au moins un appareil électronique de commande de freinage contenant un calculateur, **caractérisé en ce qu'**une boucle (SS) de transmission de signaux s'étend depuis la première extrémité de la voiture ou de la rame jusqu'à la deuxième extrémité de cette voiture ou de cette rame et revient à la première extrémité, cette boucle comportant une section (SE) de production de signaux, qui s'étend de la première à la deuxième extrémité du wagon ou de la rame, et une section (SV) de distribution de signaux qui s'étend en retour de la deuxième extrémité du wagon ou de la rame jusqu'à la première extrémité, et que la section (SE) de production de signaux est reliée électriquement, au niveau de la deuxième extrémité de la voiture ou de la rame, à la section (SV) de distribution de signaux et que la tension d'alimentation pour la boucle (SS) de transmission de signaux est envoyée au niveau de la première extrémité de la voiture ou de la rame, au début de le section (SE) de production de signaux et que dans la section (SE) de production de signaux, tous les contacts (K1.1, K1.n, K3.1, K3.n et K4.1, K4.n, K5, K6, K7, K8), qui sont fermés au moins lorsque la boucle (SS) de transmission de signaux est à l'état activé, sont disposés en série, et que les freins commandables électriquement (B1 à Bn) sont raccordés en parallèle entre eux à la section (SV) de distribution de signaux de telle sorte que, lors de la défaillance de la tension dans la section (SE) de distribution de signaux, simultanément tous les freins (B1 à Bn) sont commandés pour le freinage et qu'entre le début de la section (SE) de production de signaux et l'extrémité de la section (SB) de distribution de signaux est disposés un circuit d'automaintien servant à activer la boucle (SS) de la ligne de transmission de signaux, qui possède un contact de relais (K1.1, K1.n), qui est situé dans la section (SE) de production de signaux et est ouvert à l'état de repos et qui peut être shunté par un contact (K2.1 ou K2.n) actionné par une touche, ainsi qu'une bobine de relais (RS1 ou RSn), qui est raccordée à la section (SV) de distribution de signaux de telle sorte que lors de l'excitation de la bobine de relais (RS1, RSn), le contact de relais (K1.1, ou K1.n) se ferme.

2. Circuit de sécurité selon la revendication 1, **caractérisé en ce que** chaque appareil électronique de commande de freinage (BSG1, BSGn) est raccordé à une entrée de contrôle dans la section (SE) de distribution de signaux de telle sorte que dans le cas d'une défaillance de la tension à l'entrée de contrôle, d'une part un contact (K3.1 ou K3.n), disposé dans la section (SE) de production de signaux, est ouverte, et d'autre part la section (SV) de distribution de signaux est reliée à la masse.

3. Circuit de sécurité selon la revendication 2, **caractérisé en ce que** chaque contact (K3.1 à K3.n), commandé par l'un des appareils électronique de commande de freinage (BSG1, BSGn) dans la section (SE) de production de signaux est ouvert lorsque la boucle (SS) de transmission de signaux est à l'état de repos, et les appareils de commande de freinage (BSG1, BSGn) possèdent respectivement une entrée d'activation, qui est commandée conjointement avec l'activation de la boucle (SS) de transmission de signaux, à la suite de quoi ce contact (K3.1, K3.n) est fermé.

4. Circuit de sécurité selon l'une des revendications 1 à 3, **caractérisé par** un interrupteur d'urgence (N1, Nn), lors de l'actionnement duquel l'un des contacts (K4.1, K4.n) est ouvert dans la section (SV) de production de signaux et simultanément la section (SB) de distribution de signaux est reliée à la masse.

5. Circuit de sécurité selon l'une des revendications 1 à 4, **caractérisé par** un frein de secours d'habitacle (FB), lors de l'actionnement duquel l'un des contacts (K8) est ouvert dans la section (SE) de production de signaux.

6. Circuit de sécurité selon l'une des revendications 1 à 5, **caractérisé par** un appareil inductif de sécurité de rame (IZ1), un des contacts (K7) dans la section (SE) de production de signaux étant ouvert lors de la réponse de cet appareil de sécurité ou lors de la défaillance du fonctionnement de cet appareil de sécurité, identifiée par les appareils de commande de freinage (BSG1, BSGn).

7. Circuit de sécurité selon l'une des revendications 1 à 6, **caractérisé par** un dispositif pour le shuntage de ce circuit pour un fonctionnement en déplacement en cas d'urgence, avec des dispositifs pour desserrer les freins commandables (B1 à Bn), la vitesse du véhicule étant limitée à une valeur maximale prédéterminée à partir des appareils de commande de freinage (BSG1, BSGn).
